# EUROPEAN PATENT SPECIFICATION

(11) **EP 3 206 062 B1**
(45) Date of publication and mention of the grant of the patent: **04.01.2023**
(21) Application number: 16155525.5
(22) Date of filing: 12.02.2016
(51) Int. Cl.: G02B 6/12, G02B 6/122

(54) **WAVEGUIDE STRUCTURE FOR OPTICAL COUPLING**
WELLENLEITSTRUKTUR FÜR OPTISCHE KOPPLUNG
STRUCTURE DE GUIDE D'ONDES POUR COUPLAGE OPTIQUE

(43) Date of publication of application: 16.08.2017
(73) Proprietor: Huawei Technologies Research & Development Belgium NV, 9052 Ghent (BE)
(72) Inventor: TASSAERT, Martijn, 80992 Munich (DE)
(74) Representative: Körber, Martin Hans

(56) References cited:
- WO-A1-2015/011845
- US-A1- 2003 081 902
- US-A1- 2004 114 872
- US-A1- 2012 224 813
- US-A1- 2014 233 881
- Kazuto Itoh ET AL: "Coupling structures between crystal/amorphous Si waveguides for in-plane integration", Institute of Electronics, Information and Communication Engineers - Optoelectronics Research Group - April Study Group, 23 April 2015 (2015-04-23), XP055290050, Retrieved from the Internet: URL:http://www.ieice.org/~ope/ope/content/ programs/AprilSymposium/2015/Proc-IEICEOPE -201504-Atami.pdf [retrieved on 2016-07-20]

## Description

### TECHNICAL FIELD

The present invention relates to a waveguide structure for optical coupling, and to its fabrication method. In particular, the waveguide structure is obtainable by transfer printing of a one device to another device or to a substrate. The waveguide structure achieves vertical optical coupling, preferably between two coupled devices, with low loss. At the same time, the waveguide structure allows for a large alignment tolerance of the devices upon another. To this end, the waveguide structure employs a waveguide 'trident', which includes a first waveguide and two or more second waveguides, in order to transfer light.

### BACKGROUND

Silicon photonics is rapidly gaining importance as a generic technology platform usable for a wide range of applications. Such applications can, for instance, be used in the technical fields of telecommunication, data communication, interconnecting or sensing. Silicon photonics has the main advantage that it allows implementing photonic functions through the use of CMOS compatible wafer-scale technologies on high quality, low cost silicon substrates. Further, due to the availability of silicon mass production, the price of silicon photonics chips, which sometimes integrate hundreds of basic building blocks, can be extremely aggressive. This is very important especially for short-distance applications, like data communication, interconnecting or access networks, for which device cost is a major concern.

However, due to the fact that silicon is an indirect band-gap material, it is difficult to monolithically integrate active components. Therefore, for conventionally integrating active components, devices need to be butt-coupled or flip-chipped, which leads to more expensive packaging. The alternative would make the fabrication process much more complex and expensive.

A first known solution to this problem is growing germanium on silicon. While this solution allows producing, for instance, photo-detectors and electro-absorption modulators, their fabrication process becomes quite complex, and the produced components are not as good as components fabricated with state-of-the-art III-V semiconductor technology. Furthermore, amplifiers and lasers are still not possible with this solution.

A second known solution applies heterogeneous integration by wafer bonding. While promising results have been obtained with this solution, it currently remains impractical, due to the requirement of III-V semiconductor processing on silicon wafers.

A third known solution uses a transfer technology with an intermediate substrate (e.g. transfer printing), which allows for high throughput placement of finished (e.g. active) devices onto the substrate. This solution, and any transfer technology in general, have the potential to significantly reduce the cost of silicon photonics chips, while at the same time increasing their performance. This is firstly due to the fact that all III-V semiconductor processing can be done in a dedicated III-V fab, and on wafers with dense arrays of devices. Since devices can be packed closely together on the wafers, the cost per device can be quite low. Further, such device wafers can be fully optimized for the device type that is produced, which is an advantage over a monolithical integration fabricated with III-V semiconductor technology. Secondly, transfer printing is a wafer-scale process, i.e. large amounts of devices can be printed at the same time, which reduces the cost of integration. Thirdly, since the devices are lifted off from the top of the active device wafer, they can be very closely integrated with the underlying circuit on the substrate, similarly to heterogeneous integration, but without the difficulties of wafer bonding and III-V semiconductor processing on 200-300 mm silicon wafers.

There is one problem, however, with the third solution using transfer technology. Namely, an alignment accuracy, which can be achieved in e.g. a transfer printing process is limited to about 3σ < 1.5 um. As a consequence, in order to be able to use the third solution for silicon photonics devices, there is need for a more alignment tolerant interface between, for instance, printed active devices and underlying silicon photonics circuits on a substrate or other device.

In the somewhat different technical field of fiber-to-chip coupling, for which waveguide alignment is sometimes also critical, a so-called trident edge coupler is known. The trident coupler consists of two inverted-tapering parallel waveguides, which are placed next to each other, and which convert an optical input mode to an optical even order mode in the parallel waveguides. After light propagates through the parallel waveguides, the even order mode is converted into a fundamental mode of a third single-mode waveguide, which is added between the two parallel waveguides. The third waveguide tapers from a narrow tip to a wider waveguide shape, while the two parallel waveguides taper down to two narrow tips.

Compared to a conventional edge coupler, this trident edge coupler allows for a slight enhancement of the modal overlap with the incoming light, also when there is a lateral alignment error. However, the trident coupler is only usable as an edge coupler, and cannot be used as a so-called evanescent coupler, i.e. a coupler for transferring light in between different, vertically arranged device layers or devices. In other words, the trident coupler cannot be used at device interfaces obtained with transfer printing technologies.

US2014/0233881A1 shows an optical waveguide structure according to the preamble of appended independent claim 1.

US2004/114872A1 shows an optical functional device for controlling optical propagation including two waveguides connected along an optical axis.

### SUMMARY

In view of the above-mentioned problems and disadvantages, the present invention aims to improve the known solutions. The present invention thereby has the object to provide a waveguide structure, which is usable as an evanescent coupler, and a fabrication method thereof. Particularly, the present invention desires to provide a waveguide structure, which achieves a higher alignment tolerance than the conventional solutions. The waveguide structure should specifically be usable for vertical (device) interfaces as, for instance, obtained with transfer printing technologies. That is, an efficient coupling between waveguides in different vertical layers of one device, or between waveguides of two vertically coupled devices, is to be achieved. Efficient coupling in this sense is achieved by low coupling losses (i.e. < 0.1 dB) for relatively large alignment errors (i.e. in the order of 1 µm).

The object of the present invention is achieved by the solutions provided in the enclosed independent claims. Advantageous implementations of the present invention are further defined in the dependent claims.

In particular, the present invention proposes the use of a waveguide structure including a waveguide 'trident', in order to improve the coupling efficiency between device layers or devices, also when the alignment is off. Thereby, multiple waveguides with oppositely tapered end sections are used, in order to transfer light (in the vertical direction) in between different device layers or devices, especially transfer-printed or flip-chipped devices.

Embodiments of the present invention are defined by a waveguide structure according to independent claim 1, and a method of fabricating a waveguide structure according to independent claim 5. Additional features are provided in the dependent claims. In the following, parts of the description and drawings referring to embodiments, which are not covered by the claims, are not presented as embodiments of the invention, but as examples useful for understanding the invention.

A first aspect of the present invention provides a waveguide structure for optical coupling, comprising a first waveguide embedded in a first cladding, at least two second waveguides distanced vertically from the first waveguide and embedded in a second cladding provided on the first cladding, wherein the first and second waveguides each comprise an at least partly tapered end section in a coupling region of the waveguide structure, the end section of the first waveguide being tapered oppositely to the end sections of the second waveguides, and wherein the first waveguide is arranged laterally, preferably centered, between the at least two second waveguides in the coupling region.

Whenever the word 'vertically' is used, a direction along the growth (or fabrication or integration) direction of the waveguide structure is meant. The 'vertical' direction is perpendicular to the plane, in which the waveguides of the waveguide structure reside. Whenever the word 'laterally' is used, a direction perpendicular to the extension direction of the waveguides, and also perpendicular to the 'vertical' direction, is meant. Whenever the word 'longitudinally' is used, a direction along the extension direction of the waveguides, i.e. perpendicular to the 'lateral' and to the 'vertical' directions is meant.

In the proposed waveguide structure of the first aspect, there are at least two claddings (i.e. device layers) provided on top of each other. The claddings may be of the same type or may be of different types. Light in the waveguide structure can be transferred between the waveguides, which are respectively embedded in the two claddings. For low coupling losses, an optical mode of the first waveguide is adiabatically transferred to an optical mode of the second waveguides. The size of the mode of the first waveguide is increased by the tapered end sections. The size of the mode in the second waveguides is large, since it spreads out as supermode over the at least two waveguides, and is further increased by the tapered end sections. As a consequence, the modes of the three laterally arranged waveguides spread out over a large lateral distance. Since further the first waveguide is placed laterally between the second waveguides, an overlap between the mode of the first waveguide and the mode of the second waveguides remains large even at significant lateral alignment errors. Accordingly, the waveguide structure of the first aspect allows for efficient coupling of light between the two cladding (device) layers even at large lateral alignment errors. Additionally, because the vertical alignment of the first and second waveguides is determined only by a layer thicknesses of the claddings, which thicknesses are usually well controllable during fabrication, the waveguide structure is overall very alignment tolerant.

By optimizing particularly the distances between the first waveguide and the second waveguides, particularly the distances and shapes of the tapered end sections, as well as optimizing the widths of the different waveguides, the coupling in the vertical direction of the waveguide structure can be optimized to a very low coupling loss of below 0.1 dB, even for significant alignment errors of order 1 µm. This alignment tolerance advantageously enables the waveguide structure to be used for interfaces obtained with transfer printing of photonics devices, as it solves the challenge to align, for example, one photonic (active) printed device to a below photonic circuit on a substrate. Since transfer printing is a wafer-scale and fast process, high yields and thus lower fabrication costs can be achieved. Furthermore, different semiconductor technologies can be combined more easily, and thus devices can become more complex without much added cost.

According to the invention, the end sections of the second waveguides are not tapered in a transfer section of the coupling region, and the end section of the first waveguide is tapered in the transfer section.

Such a design in the transfer section of the coupling region is preferable for coupling light from the first waveguide via the second waveguides to a third single-mode waveguide. The design allows for a large lateral alignment tolerance of the waveguides, since there is preference to couple to an even supermode of the second waveguides.

According to the invention, a lateral distance between the first waveguide and each of the second waveguides is at least 1.5 µm.

This preferred minimum distance between the waveguides ensures a high lateral alignment tolerance. Preferably, a length of the transfer section is selected long enough to provide for an adiabatic transition (low loss coupling) between the waveguides. Most preferably, the length of the transfer section is larger than 120 µm.

In a third implementation form of the waveguide structure according to the first aspect as such or according to any of the previous implementation forms of the first aspect, the arrangement of the first and second waveguides is designed to have a coupling with an even supermode within the coupling region, wherein any odd supermode is suppressed.

Here, the word 'suppressed' means that the mode shape of the odd supermode in the second waveguides is changed such that it substantially does not participate in the coupling. That is, it has a very small overlap with the mode (profile) in the first waveguide, particularly compared to the overlap of the even supermode with the mode in the first waveguide. Suppressing the odd supermode is particularly advantageous for coupling light from a single-mode first waveguide via the second waveguides to a third single-mode waveguide.

In a fourth implementation form of the waveguide structure according to the first aspect as such or according to any of the previous implementation forms of the first aspect, the waveguide structure further comprises a third waveguide, preferably embedded into the second cladding, wherein the third waveguide is distanced longitudinally from the first waveguide, and is preferably not distanced vertically from the second waveguides, wherein the second and third waveguides each comprise a tapered end section in a conversion region of the waveguide structure, the end sections of the second waveguides being tapered oppositely to the end section of the third waveguide, and wherein the third waveguide is arranged laterally, preferably centered, between the at least two second waveguides in the conversion region.

The third waveguide is preferably a single-mode waveguide. With the waveguide structure of the fourth implementation form, light can be coupled from the first waveguide (preferably a single-mode waveguide) to the third waveguide with very low coupling loss, even at high alignment errors between the two claddings (i.e. device layers).

In a fifth implementation form of the waveguide structure according to the second to fourth implementation forms of the first aspect, the end sections of the second waveguides in the conversion region are tapered oppositely to the end sections of the second waveguides in the coupling region.

The tapering of the second waveguides and the third waveguide, respectively, allows for adiabatic coupling between these waveguides with low coupling losses.

According to an example of the waveguide structure, the end sections of the first and second waveguides are tapered in a transfer section of the coupling region.

This design is preferable for coupling light from the first waveguide via the second waveguides to multiple waveguides or to a multimode waveguide or device. The tapering of both the first and second waveguides, respectively, allows for a coupling with increased performance, since the tapering will encourage coupling to both an even and odd supermode of the second waveguides.

A lateral distance between the first waveguide and each of the second waveguides is at least 1.5 µm.

This preferred minimum distance between the waveguides ensures a high alignment tolerance. Preferably, a length of the transfer section is long enough to provide for an adiabatic transition (coupling) between the waveguides, most preferably the length of the transfer section is larger than 80 µm.

In a further example, the arrangement of the first and second waveguides is designed to have a coupling with an even supermode and an odd supermode within the coupling region. Here, both an even and odd supermode of the second waveguides can be used to couple into, i.e. the odd supermode does not need to be suppressed. As a consequence, a stronger tapering of the end sections of the first and second waveguides, respectively, is possible, which makes the device more compact. Also a higher alignment tolerance is thus achieved. The use of both supermodes is of advantage for coupling light from the first waveguide via the second waveguides to multiple waveguides or to a multimode waveguide or device.

In a further example, the second waveguides are coupled into two separate waveguides outside of the coupling region, which separate waveguides are preferably routed to a photo-detector.

In a further example, the second waveguides are coupled into a multimode waveguide or multimode device outside of the coupling region, which multimode waveguide or multimode device is preferably routed to a photo-detector.

In a sixth implementation form of the waveguide structure according to the first aspect as such or according to any of the previous implementation forms of the first aspect, the first waveguide belongs to a first chip or substrate, and the second waveguides belong to a second chip, which second chip is transfer printed or flip-chip bonded onto the first chip or substrate.

The waveguide structure of the present invention is well suited for being employed at interfaces obtained with transfer printing technologies (and with flip-chip processes), since these technologies have only limited alignment accuracy, but the waveguide structure is very alignment tolerant. That is, in spite of the limited alignment accuracy, very low coupling losses of lower than 1 dB are achieved.

A second aspect of the present invention provides a method of fabricating a waveguide structure for optical coupling, comprising the steps of forming a first waveguide embedded in a first cladding, forming at least two second waveguides distanced vertically from the first waveguide and embedded in a second cladding provided on the first cladding, wherein the first and second waveguides are each formed with an at least partly tapered end section in a coupling region of the waveguide structure, the end section of the
first waveguide being formed oppositely tapered to the end sections of the second waveguides, and wherein the first waveguide is arranged laterally, preferably centered, between the at least two second waveguides in the coupling region.

In the method according to the invention, the end sections of the second waveguides are formed not tapered in a transfer section of the coupling region, and the end section of the first waveguide is formed tapered in the transfer section.

In the method according to the invention, a lateral distance between the first waveguide and each of the second waveguides is set to at least 1.5 µm.

In a third implementation form of the method according to the second aspect as such or according to any of the previous implementation forms of the second aspect, the arrangement of the first and second waveguides is designed to have a coupling with an even supermode within the coupling region, wherein any odd supermode is suppressed. In a fourth implementation form of the method according to the second aspect as such or according to any of the previous implementation forms of the second aspect, the method further comprises forming a third waveguide, preferably embedded into the second cladding, wherein the third waveguide is distanced longitudinally from the first waveguide, and is preferably not distanced vertically from the second waveguides, wherein the second and third waveguides are each formed with a tapered end section in a conversion region of the waveguide structure, the end sections of the second waveguides being formed tapered oppositely to the end section of the third waveguide, and wherein the third waveguide is arranged laterally, preferably centered, between the at least two second waveguides in the conversion region.

In a fifth implementation form of the method according to the second to fourth implementation forms of the second aspect, the end sections of the second waveguides in the conversion region are formed tapered oppositely to the end sections of the second waveguides in the coupling region.

In a sixth implementation form of the method according to the second aspect as such or according to any of the previous implementation forms of the second aspect, the first waveguide is formed in a first chip or substrate, and the second waveguides are formed in a second chip, which second chip is transfer printed or flip-chip bonded onto the first chip or substrate.

The method of the second aspect and its implementation forms obtains a waveguide structure according to the first aspect as such or according to any implementation form of the first aspect. Accordingly, with the method of the second aspect, all advantages and effects mentioned above can be realized.

### BRIEF DESCRIPTION OF THE DRAWINGS

The above-described aspects and implementation forms of the present invention will be explained in the following description of specific embodiments in relation to the enclosed drawings, in which:
- Fig. 1: shows schematically a waveguide structure according to an embodiment of the present invention.
- Fig. 2: shows a top view and a cross section of a waveguide structure according to an embodiment of the present invention.
- Fig. 3: shows a simulated coupling transmission for different alignment errors and taper length of a waveguide structure according to Fig. 2.
- Fig. 4: shows a top view and a cross section of a waveguide structure according to an example not forming part of the invention.
- Fig. 5: shows a top view and a cross section of a waveguide structure according to an example not forming part of the invention.
- Fig. 6: shows a simulated coupling transmission for different alignment errors and taper length of a waveguide structure according to the Figs. 4 and 5.
- Fig. 7: shows a flow diagram of steps of a fabrication method according to an embodiment of the present invention.

### DETAILED DESCRIPTION OF THE EMBODIMENTS

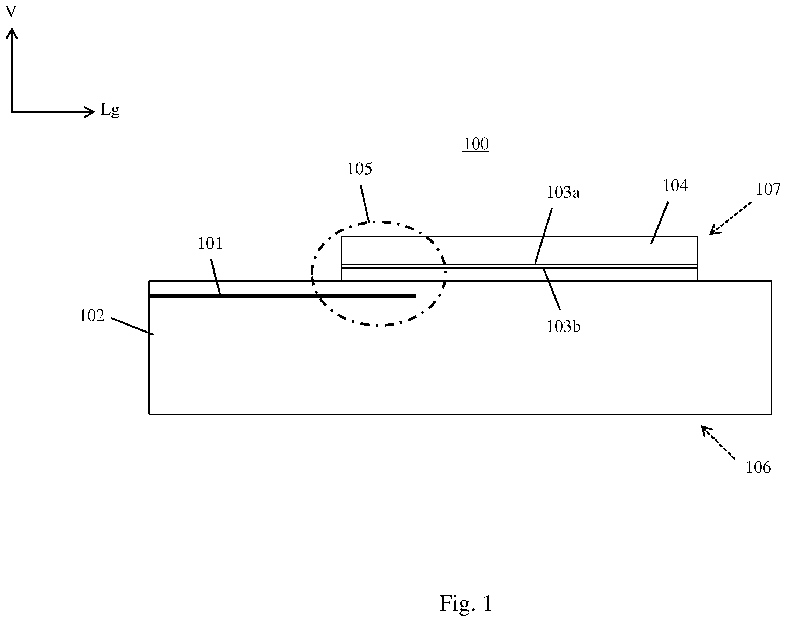

Fig. 1 shows a schematic waveguide structure 100 according to an embodiment of the present invention. The waveguide structure 100 is suitable for optical coupling, particularly for evanescent coupling between different layers of one device or between two coupled devices (as is exemplarily illustrated). The waveguide structure 100 comprises a first waveguide 101 embedded in a first cladding 102, and at least two second waveguides 103a, 103b, which are distanced vertically from the first waveguide 101, and are embedded in a second cladding 104 provided on the first cladding 102. The second waveguides 103a, 103b are preferably not distanced vertically from one another (the small offset in Fig. 1 is only for illustrative purposes of two second waveguides).

The 'vertical' direction is indicated in the schematic coordinate cross (upper left) by the axis labeled 'V'. The 'longitudinal' direction is indicated by the other axis labeled 'Lg'. The 'lateral' direction is perpendicular to both axes 'V' and 'Lg'.

The waveguides 101, 103a, 103b may be made of a high refractive index material such as silicon or a III-V material, or a medium refractive index material such as silicon nitride or silicon oxynitride. The claddings 102, 104 may be made of a high index material such as a III-V material, or a lower refractive index material such as silicon oxide or silicon oxynitride. Furthermore, the waveguides may be shallowly or deeply etched. In the shallowly etched case, the cladding will consist of a combination of waveguide material and lower index cladding material. In the deeply etched case, the cladding will only consist of cladding material. As illustrated in Fig.1, the first cladding 102 may belong to a silicon substrate or a first chip 106, and the second cladding 104 may belong to a second chip 107. In this case, the second chip 107 is preferably transfer-printed onto, or flip-chip bonded to, the first chip 106. The claddings 102, 104 may, however, also belong to one and the same device or chip. That is, the waveguide structure 100 may completely be part of a single device or chip, or may be part of two (coupled) devices or chips. It is also noted that in the waveguide structure 100 of Fig. 1, the two waveguides 103a, 103b are shown located in the top (e.g. transfer-printed) device 107, and the first waveguide 101 is shown located in the bottom (substrate) device 106. However, this placement can also be reversed, i.e. the two second waveguides 103a, 103b can be located in the bottom (substrate) device 106, and the first waveguide 101 can be located in the top (e.g. transfer-printed) device 107.

The first waveguide 101 and the second waveguides 103a, 103b each comprise an at least partly tapered end section within a coupling region 105 of the waveguide structure 100. That means that the end sections can be partly tapered or completely tapered. Important is only that the end section of the first waveguide 101 is tapered oppositely to the end sections of the second waveguides 103a, 103b, in order to support adiabatic vertical coupling between the waveguides in the coupling region 105. The tapering of the end sections also increases the respective optical mode sizes in the first waveguide 101 and the second waveguides 103a, 103b. Thus, a lateral alignment tolerance of the waveguides 101, 103a, 103b, is increased. The coupling region 105 is the part of the waveguide structure 100, in which light is actually coupled (substantially complete) from a mode in the first waveguide 101 to a mode of the second waveguides 103a, 103b, particularly to at least one supermode of the second waveguides 103a, 103b. Longitudinally, the coupling region 105 is roughly defined as ranging from the start of the tapered end section of the first waveguide 101 to its tip.

The arrangement of the waveguides in the waveguide structure 100 is such that the first waveguide 101 is arranged laterally (i.e. when viewed from above) between the at least two second waveguides 103a, 103b within the coupling region 105. If there are more than two second waveguides, their number is preferably even, most preferably there are in this case four or six waveguides. Then, two or three of the second waveguides, respectively, are arranged laterally on each side of the first waveguide 101. Preferably, for best coupling results and for largest alignment tolerances in both lateral directions, the first waveguide 101 is centered between the at least two second waveguides 103a, 103b. The high alignment tolerance is due to the fact that the supermode(s) of the second waveguides 103a, 103b spreads out over a large lateral area, and thus has a large modal overlap with the mode of the first waveguide 101, which is located laterally between the second waveguides 103a, 103b.

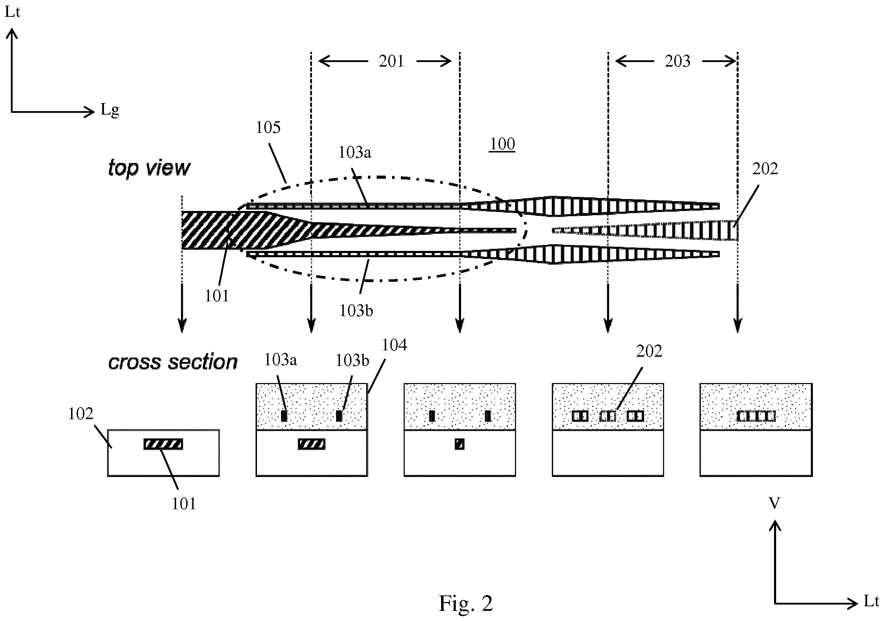

Fig. 2 shows a waveguide structure 100, which bases on the one shown in Fig.1. The waveguide structure 100 in Fig. 2 is shown as viewed from the top (upper part) and as viewed as a cross section (lower part). The waveguide structure 100 shown in Fig. 2 is designed advantageously for coupling light from a first single-mode waveguide 101 via the second waveguides 103a, 103b into a third single-mode waveguide, which is shown in Fig. 2 as third waveguide 202. The third waveguide 202 is preferably distanced longitudinally from the first waveguide 101, and is preferably (as illustrated in Fig. 2) not distanced vertically from the second waveguides 103a, 103b.

For the top view of Fig. 2, the 'lateral' direction is indicated in the schematic coordinate cross (upper left) by the axis labeled 'Lt'. The longitudinal' direction is indicated by the other axis labeled 'Lg'. The 'vertical' direction is perpendicular to both axes 'Lt' and 'Lg'. For the cross section of Fig. 2, the 'vertical' direction is indicated in the schematic coordinate cross (lower right) by the axis labeled 'V'. The 'lateral' direction is indicated by the other axis labeled 'Lt'. The 'longitudinal' direction is perpendicular to both axes 'V' and 'Lt'.

In order to obtain a high alignment tolerance for the waveguide structure 100, in particular for lateral alignment errors, the specific arrangement ('trident' structure) of the first waveguide 101 and the second waveguides 103a, 103b is provided. By arranging the first waveguide 101 laterally in between the at least two second waveguides 103a, 103b, and by providing the waveguides 101, 103a, 103b, respectively, with oppositely tapered end sections, a large lateral mode overlap between the mode in the first waveguide and at least one supermode in the second waveguides 103a, 130b is obtained for low loss light coupling. The large lateral mode overlap allows for high alignment errors when aligning the waveguides 101, 103a, 103b to another.

In particular, the waveguide structure 100 of Fig. 1 is designed such that the first waveguide 101 tapers in the coupling region 105 of the waveguide structure 100 from an initially broader waveguide width to narrower waveguide widths. Thereby, the mode size in the first waveguide 101 is expanded. As a consequence, the mode eventually spreads out over the whole arrangement of the three waveguides 101, 103a, 103b, and has a large lateral overlap with a mode in the second waveguides 103a, 103b. Thus light couples to the second waveguides 103a, 103b.

The waveguide structure 100 of Fig. 1 is designed particularly to have a coupling with a large even supermode of the second waveguides 103a, 103b within the coupling area 105, while coupling to any odd supermode is suppressed (i.e. the modal overlap between the mode in the first waveguide 101 and the odd supermode in the second waveguides 103a, 103b is small, so that light will couple substantially only to the even supermode). To this end, the end sections of the second waveguides 103a, 103b are not tapered in a transfer section 201 of the coupling region 105, whereas the end section of the first waveguide 101 is tapered in the transfer section 201, in order to expand the mode size. In the transfer section 201, light is transferred from a fundamental mode in the first waveguide 101 to an even supermode in the second waveguides 103a, 103b.

After light is transferred into the even supermode of the second waveguides 103a, 103b, the second waveguides 103a, 103b are expanded, wherein the end sections of the second waveguides 103a, 103b are tapered oppositely to the first waveguide 101. Thereby, the even supermode becomes more confined to the second waveguides 103a, 103b. This leads advantageously to smaller losses, when the first waveguide 101 finally ends at the end of the coupling region 105 (and also when the third waveguide 202 is finally introduced), because light will not 'see' this abrupt change in the waveguide structure 100, and thus no reflections are caused.

Thereafter, the at least two waveguides 103a, 103b are again tapered within a conversion region 203 of the waveguide structure 100. In particular, in this conversion region 203 the end sections of the second waveguides 103a, 103b are tapered oppositely to the tapering of the end sections of the second waveguides 103a, 103b in the coupling region 105. That is, after being expanded in the transfer section 201, the widths of the second waveguides 103a, 103b now become narrower again. In the conversion region 203, also the third waveguide 202 comprises a tapered end section. Thereby, the end sections of the second waveguides 103a, 103b are tapered oppositely to the end section of the third waveguide 202. Since additionally, the third waveguide 202 is arranged laterally, preferably centered, between the at least two second waveguides 103a, 103b, the even supermode in the
second waveguides 103a, 103b overlaps largely with a single mode in the third waveguide 202, and accordingly light is transferred from the second waveguides 103a, 103b to the third waveguide 202.

In summary, with the above-described waveguide structure 100, light in a fundamental mode of the first waveguide 101 can be coupled via the at least two second waveguides 103a, 103b to a fundamental mode in the third waveguide 202, wherein the coupling is efficient even for large lateral alignment errors of the participating waveguides. Such misalignment error may arise from errors when providing the first and second claddings 102, 104 upon another, for instance, when transfer-printing a second chip 107 to a substrate or first chip 107 (as shown exemplarily in Fig. 1).

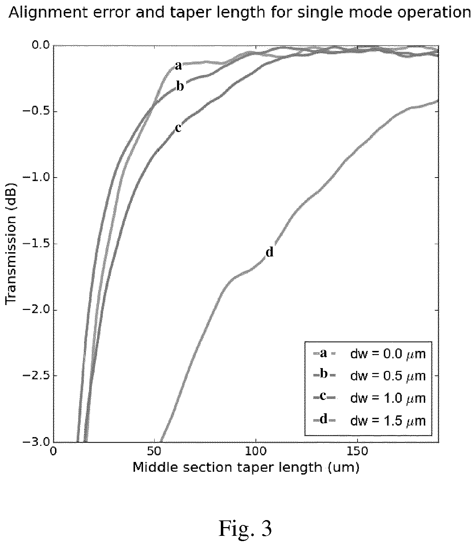

Fig. 3 shows a simulated coupling transmission (shown on the y-axis) for different lateral alignment errors (different curves a - d corresponding to alignment errors of 0.0 µm, 0.5 µm, 1.0 µm, and 1.5 µm, respectively), and taper lengths (corresponding to the length of the transfer sections 201, shown on the x-axis) of a waveguide structure 100 just described with respect to Fig. 2. In particular, as an example, the coupling between two 220 nm thick silicon single-mode waveguides (as first waveguide 101 and third waveguide 202), respectively, is simulated. The taper length of the first waveguide 101 in the transfer section 201 should at least be long enough to provide for an adiabatic transition (coupling) between the first waveguide 101 and the at least two second waveguides 103a, 103. Preferably, the taper length of the first waveguide 101 (defining the length of the transfer section 201) is larger than 120 µm. A lateral distance between the first waveguide 101 and each of the second waveguides 103a, 103b (laterally center-to-center) is at least 1.5 µm, for instance 1.58 µm as used for the simulation shown in Fig. 3. In the transfer section 201, the second waveguides 103a, 103b have a (substantially constant) width of 0.2 µm or smaller, for instance 0.18 µm as used for the simulation shown in Fig. 3, most preferably even 0.15 µm or smaller to suppress the odd supermode.

After the transfer section 201, the taper lengths of the end sections of the second waveguides 103a, 103b from their tips to the points, at which the first waveguide 101 stops, can be made quite short, i.e. is preferably in the range of 20-50 µm. Also the longitudinal distance between the first waveguide 101 and the third waveguide 202 is not critical, and is preferably in the range of 20-50 µm. The taper lengths in the conversion section 203 can be short as well, as this section is typically not dependent on lateral alignment error (since preferably the second waveguides 103a, 103b and the third waveguide 202 are both embedded in the second cladding 104), and are preferably in the range of 20-50 µm for optimized transmission. These lengths are obtained by assuming an adiabatic mode transition in every section.

The simulated results show that for a length of a transfer section 201 of above 120 µm, low coupling losses of below 0.1 dB can be achieved for lateral alignment errors of up to 1 µm.

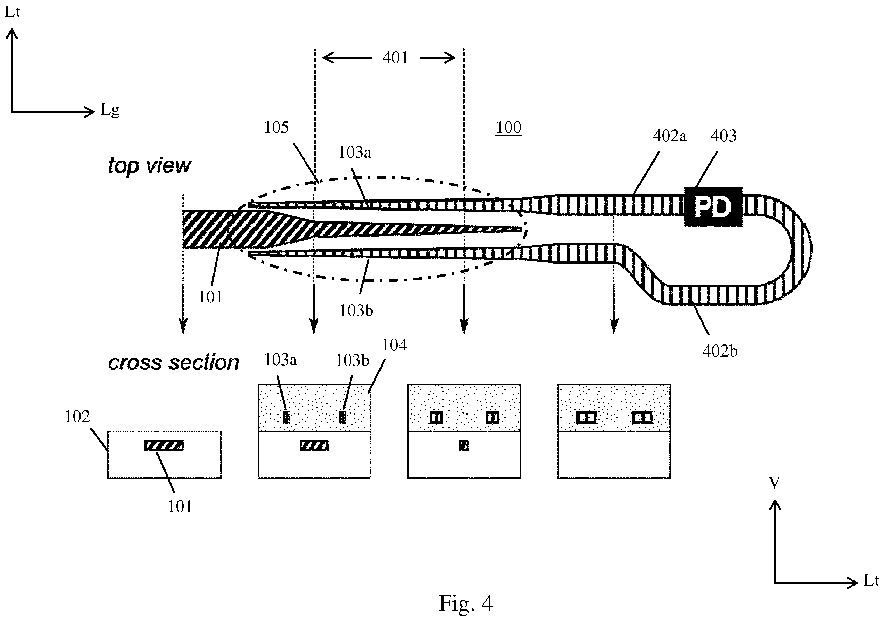

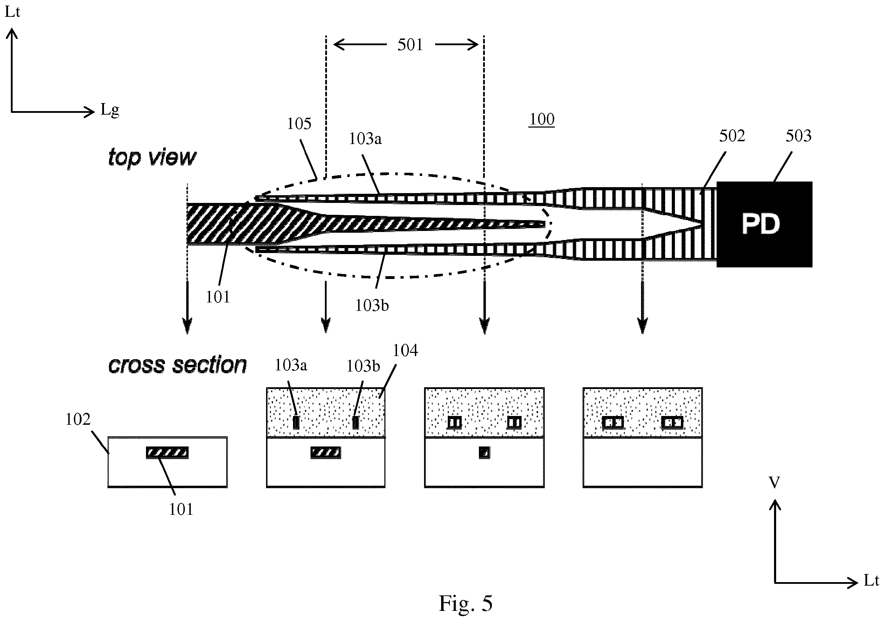

Figs. 4 and 5 show waveguide structures 100, which are based on the one shown in Fig. 1, but which do not form part of the invention.

The waveguide structures 100 are each shown as viewed from the top (upper part) and as viewed as a cross section (lower part). The Figs. 4 and 5 show waveguide structures 100, which are designed particularly for coupling from a first single-mode waveguide 101 via the second waveguides 103a, 103a into either multiple waveguides 402a, 402b (as in Fig. 4) or into a multimode waveguide or device 502 (as in Fig. 5). For this design, the achievable alignment tolerance is even higher. This is due to the fact that light can also be coupled from the mode in the first waveguide 101 to an odd supermode in the second waveguides 103a, 103b. In other words, the arrangement of the first and second waveguides 101, 103a, 103b, may be designed to have a coupling with an even supermode and an odd supermode within the coupling region 105.

As a resulting difference to the waveguide structure 100 shown in Fig. 2, the taper lengths of the waveguides 101, 103a, 103b, can be made shorter. Further, because the coupling to the odd supermode does not need to be suppressed, both the end sections of the first waveguide 101 and of the second waveguides 103a, 103b can already be tapered in a transfer section 401 (shown in Fig. 4) or 501 (shown in Fig. 5) of the coupling region 105. The tapered end sections in the transfer section 401, 501 expands the second waveguides 103a, 103b, as in this way there will be a larger overlap with the odd supermode, in order to improve the overall coupling efficiency.

For the top view in both Figs. 4 and 5, the 'lateral' direction is indicated in the schematic coordinate cross (upper left) by the axis labeled 'Lt'. The 'longitudinal' direction is indicated by the other axis labeled 'Lg'. The 'vertical' direction is perpendicular to both axes 'Lt' and 'Lg'. For the cross section in both Figs. 4 and 5, the 'vertical' direction is indicated in the schematic coordinate cross (lower right) by the axis labeled 'V'. The 'lateral' direction is indicated by the other axis labeled 'Lt'. The 'longitudinal' direction is perpendicular to both axes 'V' and 'Lt'.

In Fig. 4 the second waveguides 103a, 103b are finally coupled into two separate waveguides 402a, 402b outside of the coupling region 105. The separate waveguides 402a, 402b are preferably routed to a photo-detector 403. In Fig. 5 the second waveguides 103a, 103b are finally coupled into a multimode waveguide 502 or a multimode device outside of the coupling region 105. The multimode waveguide 502 or multimode device is preferably routed to a photo-detector 503.

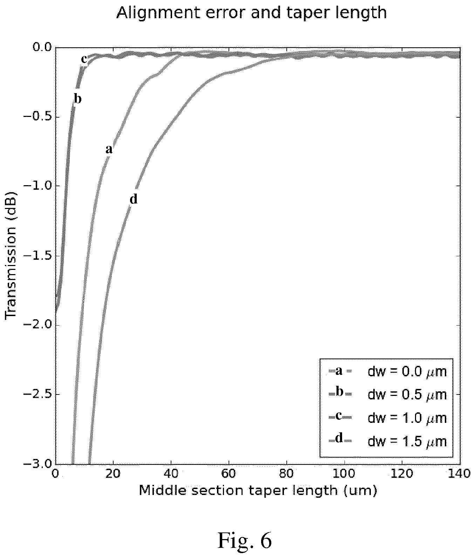

Fig. 6 shows a simulated coupling transmission (shown on the y-axis) for different lateral alignment errors (different curves a - d corresponding to alignment errors of 0.0 µm, 0.5 µm, 1.0 µm, and 1.5 µm, respectively) and taper lengths (corresponding to the length of the transfer section 401, 501, shown on the x-axis) of a waveguide structure 100 as described with respect to the Figs. 4 and 5. In particular, an example simulation result is given for a coupling between a 220 nm thick silicon first waveguide 101 into finally two 220 nm thick separate waveguides 402a, 402b. For the calculation of the coupling transmission, both the transferred power to the even and the odd supermode of waveguides 103a and 103b are taken into account. The length of the transfer sections 401 and 501, in which all three waveguides 101, 103a 103b, are tapered, is in this case preferably at least 80 µm. A lateral (center-to-center) distance between the first waveguide 101 and each of the second waveguides 103a, 103b is preferably at least 0.7 µm, more preferably at least 1.0 µm, most preferably at least 1.5 µm, for instance 1.55 µm as used for the simulation shown in Fig. 6). For the preferred taper lengths over the transfer section 401, 501 of more than 80 um, alignment tolerant coupling is achieved with an alignment error tolerance of up to 1.5 um and a simulated coupling loss of less than 0.1 dB.

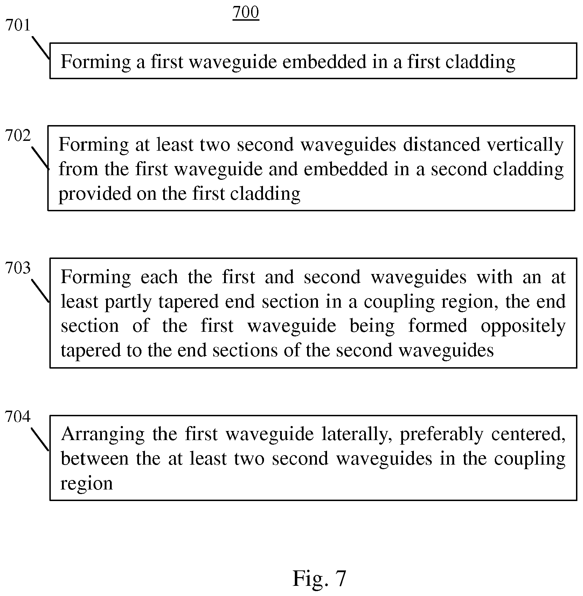

Fig. 7 shows steps of a method 700 of fabricating a waveguide structure 100 for optical coupling as described above. The method 700 comprises a first step 701 of forming a first waveguide 101 embedded in a first cladding 102. In a second step 702, at least two second waveguides 103a, 103b are formed distanced vertically from the first waveguide 101 and embedded in a second cladding 104 provided on the first cladding 102. Thereby, as indicated as a third step 703, the first and second waveguides 101, 103a, 103b are each formed with an at least partly tapered end section in a coupling region 105 of the waveguide structure 100, wherein particularly the end section of the first waveguide 101 is formed oppositely tapered to the end sections of the second waveguides 103a, 103b, respectively. Moreover, as indicated as a fourth step 704, the first waveguide 101 is arranged laterally, preferably centered, between the at least two second waveguides 103a, 103b in the coupling region 105 of the waveguide structure 100.

The method 700 may include performing the first step 701 in a substrate or first chip 106, performing the second step 702 in a second chip 107, and realizing the third and fourth steps 703 and 704, by e.g. transfer printing the second chip 107 to the substrate or first chip 106.

The method 700 can further include forming a third waveguide 202 as shown in Fig. 2, or forming separate waveguides 402a, 402b or a multimode waveguide 502 as shown in the Figs. 4 and 5, respectively. Accordingly, with the method 700, all advantages and benefits of the above-described waveguide structures 100 can be achieved.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Waveguide structure (100) for optical coupling, comprising:
a first waveguide (101) embedded in a first cladding (102),
at least two second waveguides (103a, 103b) distanced vertically from the first waveguide (101) and embedded in a second cladding (104) provided on the first cladding (102),
wherein the first and second waveguides (101, 103a, 103b) each comprise an at least partly tapered end section in a coupling region (105) of the waveguide structure (100), the end section of the first waveguide (101) being tapered oppositely to the end sections of the second waveguides (103a, 103b),
wherein the first waveguide (101) is arranged laterally, preferably centered, between the at least two second waveguides (103a, 103b) in the coupling region (105); and wherein
the end sections of the second waveguides (103a, 103b) are not tapered in a transfer section (201) of the coupling region (105),
the end section of the first waveguide (101) is tapered in the transfer section (201), **characterized in that**:
a lateral distance between the first waveguide (101) and each of the second waveguides (103a, 103b) is at least 1.5 µm, in particular 1.58 µm;
wherein in the transfer section (201), each of the second waveguides (103a, 103b) has a width of 0.2 µm or smaller.

2. Waveguide structure (100) according to claim 1, further comprising:
a third waveguide (202), preferably embedded into the second cladding (104), wherein the third waveguide (202) is distanced longitudinally from the first waveguide (101), and is preferably not distanced vertically from the second waveguides (103a, 103b),
wherein the second and third waveguides (103a, 103b, 202) each comprise a tapered end section in a conversion region (203) of the waveguide structure (100), the end sections of the second waveguides (103a, 103b) being tapered oppositely to the end section of the third waveguide (202), and
wherein the third waveguide (202) is arranged laterally, preferably centered, between the at least two second waveguides (103a, 103b) in the conversion region (203).

3. Waveguide structure (100) according to claim 2, wherein
the end sections of the second waveguides (103a, 103b) in the conversion region (203) are tapered oppositely to the end sections of the second waveguides (103a, 103b) in the coupling region (105).

4. Waveguide structure (100) according to one of the claims 1 to 3, wherein
the first waveguide (101) belongs to a first chip or substrate (106), and
the second waveguides (103a, 103b) belong to a second chip (107), which second chip (107) is transfer printed or flip-chip bonded onto the first chip or substrate (106).

5. Method (700) of fabricating a waveguide structure (100) for optical coupling, comprising the steps of:
forming (701) a first waveguide (101) embedded in a first cladding (102), forming (702) at least two second waveguides (103a, 103b) distanced vertically from the first waveguide (101) and embedded in a second cladding (104) provided on the first cladding (102),
wherein the first and second waveguides (101, 103a, 103b) are each formed (703) with an at least partly tapered end section in a coupling region (105) of the waveguide structure (100), the end section of the first waveguide (101) being formed oppositely tapered to the end sections of the second waveguides (103a, 103b);
wherein the first waveguide (101) is arranged laterally, preferably centered, between the at least two second waveguides (103a, 103b) in the coupling region (105), and
wherein the end sections of the second waveguides (103a, 103b) are not tapered in a transfer section (201) of the coupling region (105), and the end section of the first waveguide (101) is tapered in the transfer section (201);
**characterized in that**:
a lateral distance between the first waveguide (101) and each of the second waveguides (103a, 103b) is at least 1.5 µm, in particular 1.58 µm, and
wherein in the transfer section (201), each of the second waveguides (103a, 103b) has a width of 0.2 µm or smaller.

## Patentansprüche

1. Wellenleiterstruktur (100) zum optischen Koppeln, umfassend:
einen ersten Wellenleiter (101), der in einen ersten Mantel (102) eingebettet ist,
mindestens zwei zweite Wellenleiter (103a, 103b), die von dem ersten Wellenleiter (101) vertikal entfernt sind und in einen zweiten Mantel (104), der auf dem ersten Mantel (102) bereitgestellt ist, eingebettet sind,
wobei der erste und der zweite Wellenleiter (101, 103a, 103b) jeweils einen mindestens teilweise verjüngten Endbereich in einer Kopplungsregion (105) der Wellenleiterstruktur (100) umfassen, wobei der Endbereich des ersten Wellenleiters (101) zu den Endbereichen der zweiten Wellenleiter (103a, 103b) entgegengesetzt verjüngt ist,
wobei der erste Wellenleiter (101) zwischen den mindestens zwei zweiten Wellenleitern (103a, 103b) in der Kopplungsregion (105) seitlich, vorzugsweise zentriert, angeordnet ist; und wobei
die Endbereiche der zweiten Wellenleiter (103a, 103b) in einem Transferbereich (201) der Kopplungsregion (105) nicht verjüngt sind,
der Endbereich des ersten Wellenleiters (101) in dem Transferbereich (201) verjüngt ist,
**dadurch gekennzeichnet, dass:**
eine seitliche Entfernung zwischen dem ersten Wellenleiter (101) und jedem der zweiten Wellenleiter (103a, 103b) mindestens 1,5 µm, insbesondere 1,58 µm, beträgt;
wobei in dem Transferbereich (201) jeder der zweiten Wellenleiter (103a, 103b) eine Breite von 0,2 µm oder geringer aufweist.

2. Wellenleiterstruktur (100) nach Anspruch 1, ferner umfassend:
einen dritten Wellenleiter (202), der in den zweiten Mantel (104) vorzugsweise eingebettet ist, wobei der dritte Wellenleiter (202) von dem ersten Wellenleiter (101) in Längsrichtung entfernt ist und von den zweiten Wellenleitern (103a, 103b) vorzugsweise nicht vertikal entfernt ist,
wobei der zweite und der dritte Wellenleiter (103a, 103b, 202) jeweils einen verjüngten Endbereich in einer Umwandlungsregion (203) der Wellenleiterstruktur (100) umfassen, wobei die Endbereiche der zweiten Wellenleiter (103a, 103b) zu dem Endbereich des dritten Wellenleiters (202) entgegengesetzt verjüngt sind, und
wobei der dritte Wellenleiter (202) zwischen den mindestens zwei zweiten Wellenleitern (103a, 103b) in der Umwandlungsregion (203) seitlich, vorzugsweise zentriert, angeordnet ist.

3. Wellenleiterstruktur (100) nach Anspruch 2, wobei
die Endbereiche der zweiten Wellenleiter (103a, 103b) in der Umwandlungsregion (203) zu den Endbereichen der zweiten Wellenleiter (103a, 103b) in der Kopplungsregion (105) entgegengesetzt verjüngt sind.

4. Wellenleiterstruktur (100) nach einem der Ansprüche 1 bis 3, wobei
der erste Wellenleiter (101) zu einem ersten Chip oder einem ersten Substrat (106) gehört, und
die zweiten Wellenleiter (103a, 103b) zu einem zweiten Chip (107) gehören, wobei der zweite Chip (107) auf den ersten Chip oder das erste Substrat (106) transfergedruckt oder Flip-Chip-gebondet ist.

5. Verfahren (700) zum Herstellen einer Wellenleiterstruktur (100) zum optischen Koppeln, umfassend die Schritte:
Ausbilden (701) eines ersten Wellenleiters (101), der in einen ersten Mantel (102) eingebettet ist, Ausbilden (702) von mindestens zwei zweiten Wellenleitern (103a, 103b), die von dem ersten Wellenleiter (101) vertikal entfernt sind und in einen zweiten Mantel (104), der auf dem ersten Mantel (102) bereitgestellt ist, eingebettet sind,
wobei der erste und der zweite Wellenleiter (101, 103a, 103b) jeweils mit einem mindestens teilweise verjüngten Endbereich in einer Kopplungsregion (105) der Wellenleiterstruktur (100) ausgebildet (703) sind, wobei der Endbereich des ersten Wellenleiters (101) zu den Endbereichen der zweiten Wellenleiter (103a, 103b) entgegengesetzt verjüngt ausgebildet ist;
wobei der erste Wellenleiter (101) zwischen den mindestens zwei zweiten Wellenleitern (103a, 103b) in der Kopplungsregion (105) seitlich, vorzugsweise zentriert, angeordnet ist und
wobei die Endbereiche der zweiten Wellenleiter (103a, 103b) in einem Transferbereich (201) der Kopplungsregion (105) nicht verjüngt sind und der Endbereich des ersten Wellenleiters (101) in dem Transferbereich (201) verjüngt ist;
**dadurch gekennzeichnet, dass:**
eine seitliche Entfernung zwischen dem ersten Wellenleiter (101) und jedem der zweiten Wellenleiter (103a, 103b) mindestens 1,5 µm, insbesondere 1,58 µm, beträgt und
wobei in dem Transferbereich (201) jeder der zweiten Wellenleiter (103a, 103b) eine Breite von 0,2 µm oder geringer aufweist.

## Revendications

1. Structure de guide d'ondes (100) destinée à un couplage optique, comprenant :
un premier guide d'ondes (101) intégré dans une première gaine (102),
au moins deux deuxièmes guides d'ondes (103a, 103b) éloignés verticalement du premier guide d'ondes (101) et intégrés dans une seconde gaine (104) prévue sur la première gaine (102),
les premier et second guides d'ondes (101, 103a, 103b) comprenant chacun une section d'extrémité au moins partiellement conique dans une région de couplage (105) de la structure de guide d'ondes (100), la section d'extrémité du premier guide d'ondes (101) étant conique de manière opposée aux sections d'extrémité des deuxièmes guides d'ondes (103a, 103b),
le premier guide d'ondes (101) étant disposé latéralement, de préférence centré, entre les au moins deux deuxièmes guides d'ondes (103a, 103b) dans la région de couplage (105) ; et
les sections d'extrémité des deuxièmes guides d'ondes (103a, 103b) n'étant pas coniques dans une section de transfert (201) de la région de couplage (105),
la section d'extrémité du premier guide d'ondes (101) étant conique dans la section de transfert (201),
**caractérisé** :
**en ce qu'**une distance latérale entre le premier guide d'ondes (101) et chacun des deuxièmes guides d'ondes (103a, 103b) est d'au moins 1,5 µm, en particulier 1,58 µm ;
dans la section de transfert (201), chacun des deuxièmes guides d'ondes (103a, 103b) ayant une largeur égale ou inférieure à 0,2 µm.

2. Structure de guide d'ondes (100) selon la revendication 1, comprenant en outre :
un troisième guide d'ondes (202), de préférence intégré dans la seconde gaine (104), le troisième guide d'ondes (202) étant éloigné longitudinalement du premier guide d'ondes (101), et de préférence non éloigné verticalement des deuxièmes guides d'ondes (103a, 103b),
les deuxième et troisième guides d'ondes (103a, 103b, 202) comprenant chacun une section d'extrémité conique dans une région de conversion (203) de la structure de guide d'ondes (100), les sections d'extrémité des deuxièmes guides d'ondes (103a, 103b) étant coniques de manière opposée à la section d'extrémité du troisième guide d'ondes (202), et
le troisième guide d'ondes (202) étant disposé latéralement, de préférence centré, entre les au moins deux deuxièmes guides d'ondes (103a, 103b) dans la région de conversion (203).

3. Structure de guide d'ondes (100) selon la revendication 2,
les sections d'extrémité des deuxièmes guides d'ondes (103a, 103b) dans la région de conversion (203) étant coniques de manière opposée aux sections d'extrémité des deuxièmes guides d'ondes (103a, 103b) dans la région de couplage (105).

4. Structure de guide d'ondes (100) selon l'une des revendications 1 à 3,
le premier guide d'ondes (101) appartenant à une première puce ou un premier substrat (106), et
les deuxièmes guides d'ondes (103a, 103b) appartenant à une seconde puce (107), laquelle seconde puce (107) étant imprimée par transfert ou collée par puce retournée sur la première puce ou le premier substrat (106).

5. Procédé (700) de fabrication d'une structure de guide d'ondes (100) destinée à un couplage optique, comprenant les étapes suivantes :
la formation (701) d'un premier guide d'ondes (101) intégré dans une première gaine (102), la formation (702) d'au moins deux deuxièmes guides d'ondes (103a, 103b) éloignés verticalement du premier guide d'ondes (101) et intégrés dans une seconde gaine (104) prévue sur la première gaine (102),
les premier et second guides d'ondes (101, 103a, 103b) étant chacun formés (703) avec une section d'extrémité au moins partiellement conique dans une région de couplage (105) de la structure de guide d'ondes (100), la section d'extrémité du premier guide d'ondes (101) étant de forme conique de manière opposée aux sections d'extrémité des deuxièmes guides d'ondes (103a, 103b) ;
le premier guide d'ondes (101) étant disposé latéralement, de préférence centré, entre les au moins deux deuxièmes guides d'ondes (103a, 103b) dans la région de couplage (105), et
les sections d'extrémité des deuxièmes guides d'ondes (103a, 103b) n'étant pas coniques dans une section de transfert (201) de la région de couplage (105), et la section d'extrémité du premier guide d'ondes (101) étant conique dans la section de transfert (201) ;
**caractérisé** :
**en ce qu'**une distance latérale entre le premier guide d'ondes (101) et chacun des deuxièmes guides d'ondes (103a, 103b) est d'au moins 1,5 µm, en particulier 1,58 µm, et
dans la section de transfert (201), chacun des deuxièmes guides d'ondes (103a, 103b) ayant une largeur égale ou inférieure à 0,2 µm.
